Europäisches Patentamt

European Patent Office

Office européen des brevets

(11) Publication number: **0 188 857**
**A1**

(12) **EUROPEAN PATENT APPLICATION**

(21) Application number: **85300419.0**

(22) Date of filing: **23.01.85**

(51) Int. Cl.⁴: **H 04 M 15/28**

(43) Date of publication of application: **30.07.86**
Bulletin 86/31

(84) Designated Contracting States: **AT BE CH DE FR IT LI LU NL SE**

(71) Applicant: **Knight, David William, 3 Southfield Drive, West Bradford Nr. Clitheroe Lancashire, BB7 4TU (GB)**

(72) Inventor: **Knight, David William, 3 Southfield Drive, West Bradford Nr. Clitheroe Lancashire, BB7 4TU (GB)**

(74) Representative: **Whalley, Kevin et al, Wilson Gunn Ellis & Co. 41-51 Royal Exchange Cross Street, Manchester M2 7DB (GB)**

(54) **Telephone call cost monitor.**

(57) A telephone call cost monitor comprises a pick-up (15) connected to a detector (16), a calculator (18) and a display (19). A keyboard (11) is also provided to allow information, such as charge tariff information, to be introduced into the calculator. The monitor senses specific charge pulses, or other signals pulses passing in the telephone line, without electrical contact therewith, and generates cost information signals which can be displayed or further processed.

## TELEPHONE CALL COST MONITOR

This invention relates to a telephone call cost monitor for sensing signals passing along a telephone line. The monitor can generate signals which it can then process to provide call cost information which can be displayed or passed on for further processing.

The monitor can be adapted to detect specific call-charge signals passing along a telephone line to provide information relating to the cost of a telephone call. Apparatus for this purpose is known, but needs to be connected directly to the line. This requires installation by a skilled electrician and the permission of the owners of the telephone line.

An object of the present invention is to provide a telephone call cost monitor which can operate without direct electrical connection to a conductor along which signals pass.

The invention provides a telephone call charge monitor characterised in that it comprises a pick-up of conducting material capable of being disposed closely adjacent an insulated, signal carrying telephone line, a detector capable of detecting signals generated in the pick-up due to signals in said line; an amplifier for amplifying the detected signals to provide information signals; a memory for storing information relating to call costs; and an arithmetic unit for comprising the information signals with information from the memory to generate further signals indicative of the cost of a call for display and/or further processing.

The pick up may be in the form of a wire wrappable around the insulation of the line. The wire may itself be bare or insulated. The detector and amplifier may be part of circuitry contained within a casing. The casing may carry an alphanumeric display and a keyboard.

The monitor can sense specifically provided line signals, representative of the cost of a telephone call, being transmitted down the telephone line by the telephone company or other authority. Each line signal may be a pulse or a group of pulses each or the group representing a unit of charge. In this case the circuitry in the casing must be capable of storing information relating to each pulse or group, with a charge tariff. When each pulse or group of pulses arrives during a telephone call being monitored, the circuitry generates signals indicating the cost of the call and may display them or process them. The cost can be displayed and updated during the call or as a total at the end of the call. The cost of each call can be added to a running total held in a memory which running total can be used to check the user's telephone bill at the end of each account period, e.g. quarter.

The casing can resemble a pocket calculator, having a similar size and layout to such an instrument. A printer can be connected to the circuitry to enable a written record to be produced if desired. The circuitry can be adapted to sense the number dialled for each call and to record and display it in conjunction with the cost.

As a possible variation, the monitor can be provided with a programmable memory and an arithmetic unit, a user being able to introduce into the memory information specifying the location of the monitor (identified by the telephone number or similar information). In this case the monitor would sense the number being dialled and the acquisition of a response from the number dialled.

When a correct connection is made the arithmetic unit would compare the number called with information in its memory, calculate the charge rate and time the call to generate signals representative of the call cost which could be displayed and/or processed, eg by storage or passing on to a computer or central data handling system.

The invention will be described further, by way of example, with reference to the accompanying drawings, wherein:-

Fig. 1 is a block diagram of a preferred apparatus of the invention;

Fig. 2 is a circuit diagram of the preferred apparatus; and

Fig. 3 is a plan view of a casing of the apparatus.

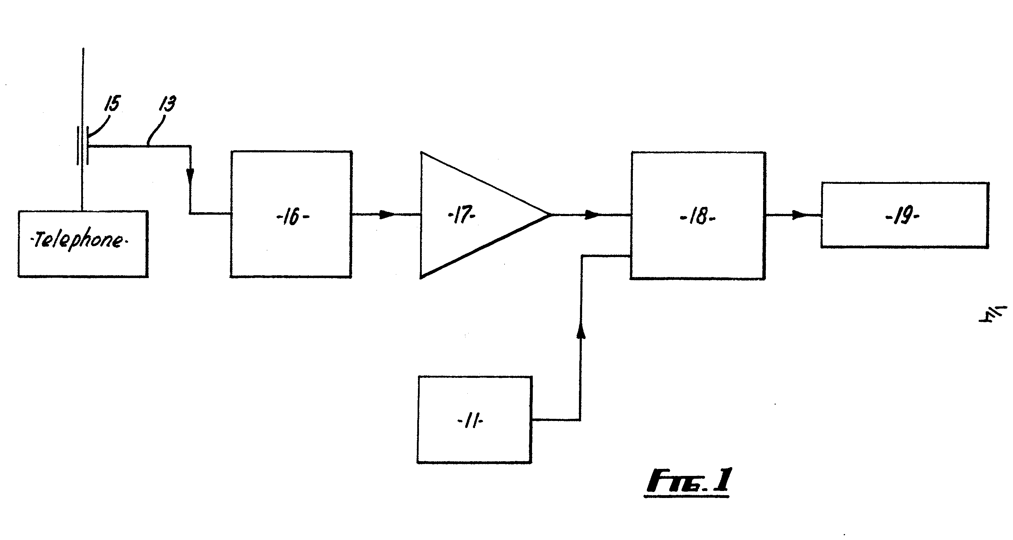

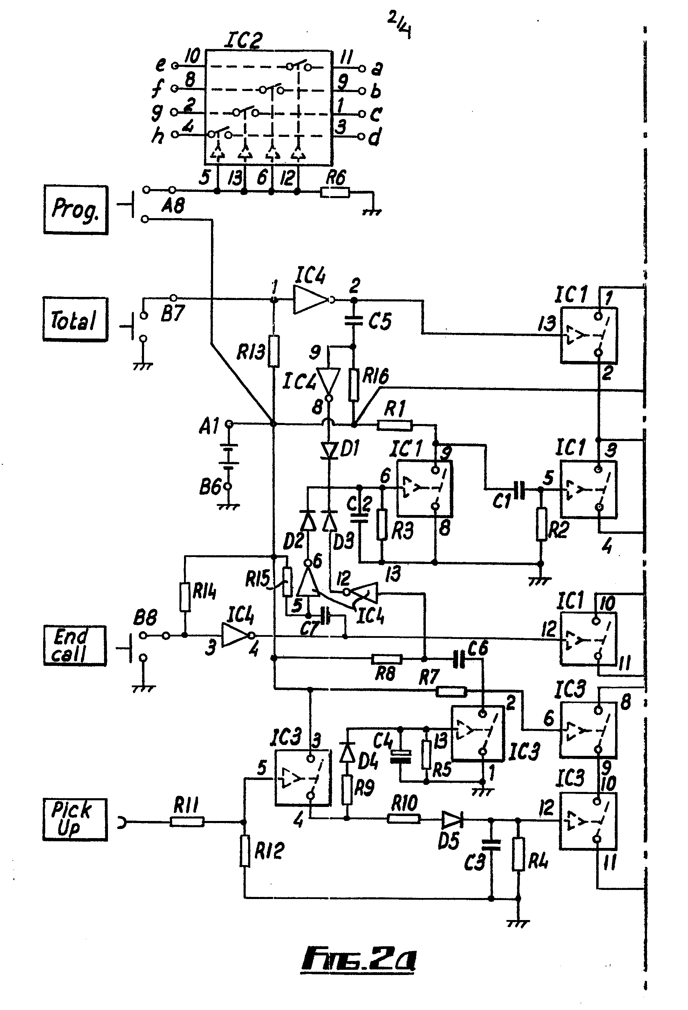

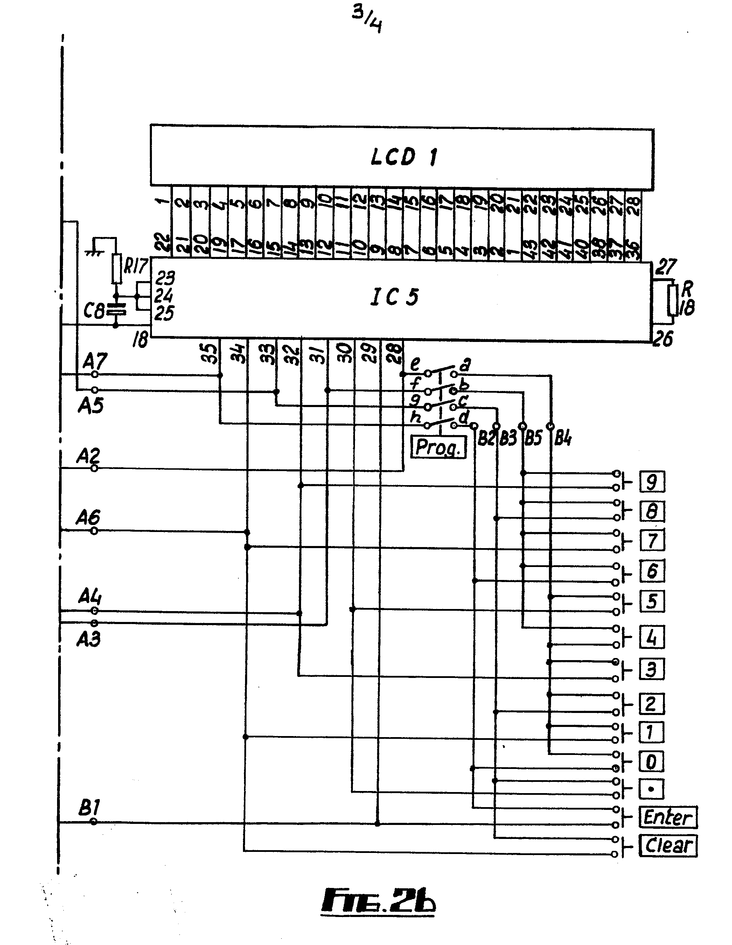

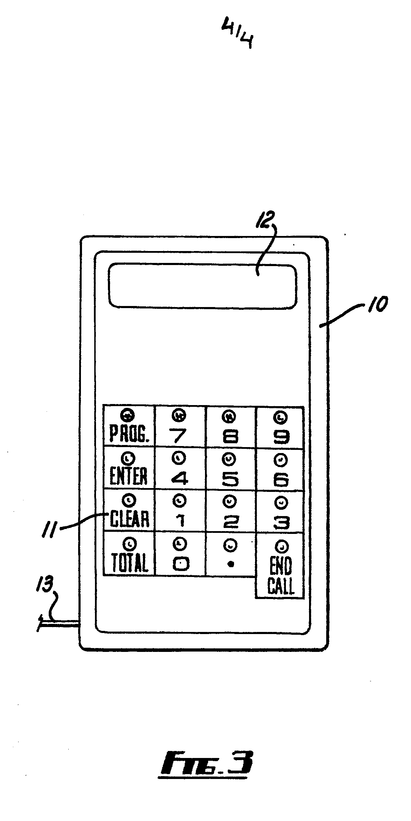

A preferred telephone call charge monitor of the invention includes a housing 10 (Fig. 3) which mounts a keyboard 11 and an LCD alphanumeric display 12. The housing 10 contains circuitry (Figs. 1 and 2) and batteries (not shown). A pick-up is in the form of a lead 13 which plugs into a socket in the housing 10 and whose end remote from the housing 10 can be wrapped closely around the insulation covering of a telephone line 14 (Fig. 1). To facilitate this the distal end of the lead can be formed into a resilient helical coil, e.g. of spring material, to maintain it in close proximity to the telephone line conductor. The size and length of the end portion of the lead 13 is such as to dispose adjacent the telephone line an effective "plate" 15 of area about 1000 $mm^2$. This "plate" provides capacitative coupling with the telephone line which causes signals to be generated in the lead 13 in response to signals passing along the telephone line. The signals in the lead 13 are detected by a detector 16, shaped and amplified at 17, to become information pulses and passed to a calculator part 18 of the circuitry. Here the incoming pulses and stored tariff information are combined to produce display pulses which can activate a display 19 or be treated further.

The valves and types of the components used in the circuitry or Fig. 2 are as follows:-

| Description | Reference |
|---|---|
| 100R 1/4W resistor | R17 |
| 120k 1/4W resistor | R9 |
| 100K 1/4W resistor | R11 |
| 220K 1/4W resistor | R10 |
| 820K 1/4W resistor | R18 |
| IM 1/4W resistor | R1, 6, 7, 8, 3, 14, 15 & 16 |
| 10M 1/4W resistor | R2, 3, 4, 5, & 12 |
| IN4148 Diode | D1, 2, 3, 4 & 5 |
| 10nf Ceramic capacitor | C1, 5, 6 & 7 |
| 100nf Polyester capacitor | C2, 3 & 8 |
| 1uf Electroly'c Capicitor | C4 |
| 4066 Integrated Circuit | ICI 2 & 3 |
| 4069 Integrated Circuit | IC4 |
| T6014 Integrated Circuit | IC5 |
| LCD Display | LCD 1 |
| 8 Way Molex Connector CON 1 & 2 | |
| 2mm PCB Mounted Sockets | SKT1 & 2 |
| Printed Circuit Boards | PCB A & C |

In operation the apparatus automatically begins to count charge pulses and to display the cost of the call as soon as the call commences. When the call is finished, the user presses the "End Call" key whereupon the total cost of the call is displayed and is added to a running total kept in a memory.

As variations on the above, the apparatus can sense the number dialled as each call is made and store this information with the call cost. Any information generated or collected can be fed to an attached printer to provide a written record. An output from the apparatus can be connected to a computer to enable telephone usage to be centrally monitored, for example in a business.

The above embodiment is suitable for use with a telephone system wherein call charge pulses are provided on the line by the telephone line owner. If, however, such pulses are not provided, a slightly more sophisticated version of the monitor can generate call charge costs from stored information and the number dialled. In this version, the monitor has a memory which can store a list of telephone numbers or area codes thereof together with an indication of the position of the monitor, eg by the telephone number or  area code of the telephone with which it is used, and has an arithmetic unit which can, when a call has been dialled, sense the number (or area code) dialled, compare it with the location of the monitor, determine from stored call charge information the rate of charge, and by monitoring the duration of the call calculate the cost thereof.  This information, eg in the form of pulses, can be displayed during or at the end of the each call, and/or passed to the memory for storage and eventual recall, and/or passed on to a central data processing arrangement for further processing as might be needed in a business When call charges vary with the time of day, the monitor may contain a clock in its circuitry capable of taking the changes into account. Alternatively, the monitor could have an external switch enabling the operator to specify, for example, full rate or cheap rate before dialling. Cheap or full rate, time of day and/or the actual number dialled could be stored in the memory for eventual recall, for example by the print out.

Although reference has been made to "telephone call" throughout the specification, it will be appreciated that the monitor of the invention can be applied to any use of a telephone line wherein time is charged for, such as telex, telecopier, computer terminal connection and like functions other than verbal telephone communication.

CLAIMS

1.    A telephone call charge monitor, characterised in that it comprises a pick-up of conducting material capable of being disposed closely adjacent an insulated, signal carrying telephone line, a detector capable of detecting signals generated in the pick-up due to signals in said line; an amplifier for amplifying the detected signals to provide information signals; a memory for storing information relating to call costs; and an arithmetic unit for comparing the information signals with information from the memory to generate further signals indicative of the cost of a call for display and/or further processing.

2.    A monitor as claimed in claim 1, wherein the pick-up includes a wire wrappable around the insulation of the line.

3.    A monitor as claimed in claim 2, where the wire is itself insulated.

4.    A monitor as claimed in claim 1, wherein the circuitry is contained within a casing of the apparatus.

5.    A monitor as claimed in claim 4, wherein the casing carries a keyboard and a display connected to the circuitry.

6.    A monitor as claimed in any preceding claim and further including a printer connector to said circuitry.

7.    A monitor as claimed in any preceding claim and for use with a telephone system wherein call charge pulses are transmitted along the telephone line, the pick-up being adapted to sense such pulses and the circuitry generating signal pulses representative of the information carried by such pulses, the arithmetic unit comparing such signal pulses with tarriff information stored in the memory to generate information pulses indicative of the call cost.

8.    A monitor as claimed in any of claims 1 to 6 and
for use with a telephone system wherein call charge pulses
are not provided on the lines, the circuitry having a
memory capable of storing a range of telephone numbers
or area codes and that of the line being monitored, and
also details of call tariffs to various destinations, the
pick-up being capable of sensing the number dialled and
generating signals which after amplification  can be passed
to the arithmetic unit where they can be compared with
the stored information and used, with time information
from an internal clock, used to generate information signals
indicative of the cost of a call, the information signals
being passed to a display and/or to storage and/or for
further processing.

-Telephone-    -16-    -17-    -18-    -19-

-11-

_FIG.1_

15  13

Fig. 2a

0188857

3/4

**FIG.2b**

0188857

4/4

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 264 956  (J.M. DELANEY)<br>* Whole document * | 1-3 | H 04 M  15/28 |
| A | | 6-8 | |
| | --- | | |
| A | CH-A- 634 188  (RENGGLI)<br>* Page 2, left-hand column, line 15 - page 3, right-hand column, line 20; figures * | 1 | |
| | --- | | |
| A | US-A-4 404 433  (WHEELER)<br>* Column 1, line 55 - column 10, line 10; figures * | 6-8 | |
| | ----- | | |

**TECHNICAL FIELDS SEARCHED (Int. Cl.4)**

H 04 M

The present search report has been drawn up for all claims

| Place of search | Date of completion of the search | Examiner |
|---|---|---|
| THE HAGUE | 16-08-1985 | KEPPENS P.M.R. |